# FASCICULE DE BREVET EUROPEEN

(11) **EP 0 629 793 B1**
(45) Date de publication et mention de la délivrance du brevet: **15.04.1998**
(21) Numéro de dépôt: 94109067.2
(22) Date de dépôt: 14.06.1994
(51) Int. Cl.: F16G 11/10, A43C 7/00

(54) **Bloqueur de lacet**
Klemmvorrichtung für Schnürsenkel
Holding-device for laces

(30) Priorité: 21.06.1993 FR 9307715
(43) Date de publication de la demande: 21.12.1994
(73) Titulaire: Salomon S.A., 74370 Metz-Tessy (FR)
(72) Inventeur: Leick, Patrick, F-74370 Villaz (FR)

(56) Documents cités:
- EP-A- 0 248 290
- WO-A-88/02077
- US-A- 2 200 895
- US-A- 3 007 220
- US-A- 3 965 544
- US-A- 4 665 590
- US-A- 4 807 333

## Description

L'invention concerne un dispositif mécanique de blocage de brins souples tels que des câbles, des cordes, des fils, des lacets, ou tout autre produit présenté sous un aspect similaire.

L'invention a trait plus particulièrement au blocage des lacets de chaussures.

L'invention concerne plus particulièrement encore le domaine du sport, et notamment les chaussures de ski, de ski de fond, de vélo, de randonnée, de marche ou autre.

L'art antérieur révèle, par le brevet US-A-3 564 670, un mécanisme de blocage de fils, par effet de coincement des brins du fil entre une roue mobile et deux chemins convergents, mécanisme dans lequel un effort exercé par un utilisateur provoque le déplacement de la roue pour obtenir le blocage des brins dans les chemins.

L'utilisation de ce mécanisme impose à l'utilisateur d'exercer d'abord une tension sur le fil avec une main, puis de descendre le bloqueur et enfin de déplacer la roue de blocage jusqu'à position de coincement avec l'autre main.

Ce mode opératoire constitue donc un problème, d'une part parce que le blocage est insuffisant tant que la roue n'a pas été positionnée correctement, d'autre part parce que la manoeuvre est difficile, peu précise et peut notamment entraîner une perte de tension des fils lors du blocage, et enfin parce qu'il peut être nécessaire de déplacer la roue avant de déplacer le bloqueur.

Le document US-A-4 807 333 divulgue également un mécanisme de blocage de fils qui fonctionne par effet de coincement des brins de fil entre un organe de blocage mobile et deux chemins convergents.

Ce mécanisme comprend des moyens pour désolidariser totalement les deux brins de fil, et présente les mêmes inconvénients que ceux du document cité avant.

Le document US-A-2 200 895 divulgue un mécanisme de blocage des fils qui fonctionne également par effet de coincement des brins du fil entre un organe de blocage mobile en translation et deux chemins convergeants, l'organe de blocage mobile étant sollicité par un ressort contre les brins de fil. Dans ce cas, le problème est qu'une différence d'effort de traction entre les brins de fils engendre le glissement de l'organe de blocage par rapport aux brins de fil, empêchant le blocage desdits brins.

L'art antérieur révèle également, par le brevet DE-U-19 24 757, un mécanisme de blocage de fils par effet de coincement entre un pion et un chemin où sont disposés les fils, et dans lequel le pion, mobile uniquement en translation selon un axe de symétrie du bloqueur, est maintenu en permanence en contact des fils par un ressort.

Le problème de ce mécanisme connu est qu'une différence d'effort de traction entre les fils engendre le glissement du pion par rapport aux fils et empêche le blocage desdits fils.

Le but de la présente invention est de remédier à ces inconvénients et de proposer un dispositif de blocage de conception simple et peu coûteuse, pouvant être actionné facilement sans risque de coincement indésiré de l'organe de blocage et garantissant un coincement parfait des brins de fil en toutes circonstances.

Ce but est atteint par l'invention qui propose une solution constituée par un dispositif de blocage, agissant pour au moins un brin de fil, comportant un corps creux, un organe de blocage et un poussoir, le corps creux comportant une cavité définissant, d'une part, au moins un chemin de passage pour chaque brin de fil, et d'autre part, un logement pour l'organe de blocage, l'organe de blocage étant destiné à coopérer avec chaque chemin pour le blocage par effet de coincement de chaque brin de fil, l'organe de blocage étant de forme circulaire et monté libre en rotation à l'intérieur de la cavité, le poussoir étant solidaire en translation de l'organe de blocage pour la manoeuvre de celui-ci dans la direction de blocage, caractérisé en ce que l'organe de blocage est monté libre en rotation par rapport au poussoir autour d'un axe de direction sensiblement perpendiculaire à la direction de blocage, et en ce qu'au poussoir sont associés des moyens élastiques le sollicitant élastiquement dans le sens du blocage du ou des brins de fil.

Ainsi, bien qu'étant sollicité élastiquement, l'organe de blocage demeure libre en rotation et permet d'équilibrer les tensions sur les deux brins du fil même en cas de différence entre les efforts exercés sur lesdits brins.

Le blocage est donc toujours réalisé. Par ailleurs, le fait que l'organe de blocage soit sollicité en permanence dans la direction de blocage permet de simplifier l'opération de serrage puisqu'il suffit de déplacer l'organe de blocage le long du ou des fils jusqu'à obtention de la tension de serrage souhaitée pour obtenir l'effet de serrage désiré.

Pour une meilleure compréhension de l'objet de l'invention, il sera fait référence à la description qui suit en liaison aux dessins joints en annexe et qui s'ordonnent de la façon suivante.

La figure 1 est une vue d'ensemble d'une chaussure comportant, notamment, un lacet et un bloqueur selon l'invention.

La figure 2 est une vue du bloqueur de la figure 1 en perspective éclatée.

La figure 3 est une vue extérieure de dessus du bloqueur en position de coincement des fils.

La figure 4 est une vue extérieure, similaire à la figure 3, du bloqueur en position de déblocage des fils.

La figure 5 est une vue en coupe, selon les lignes de contact des fils et des chemins, du bloqueur en position de coincement des fils.

La figure 6 est une vue similaire à la figure 5 du bloqueur en position de déblocage des fils.

La figure 7 est une vue en coupe du bloqueur selon VII de la figure 3.

La figure 8 est une vue en coupe du bloqueur selon VIII de la figure 7.

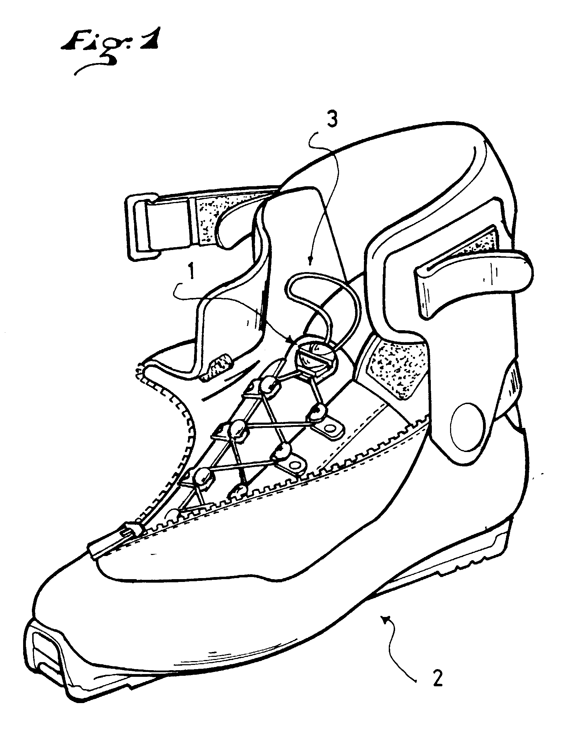

L'invention décrite est un bloqueur de lacet 1, montré à la figure 1 dans un exemple d'application à une chaussure de ski de fond 2, pour le blocage d'un lacet 3.

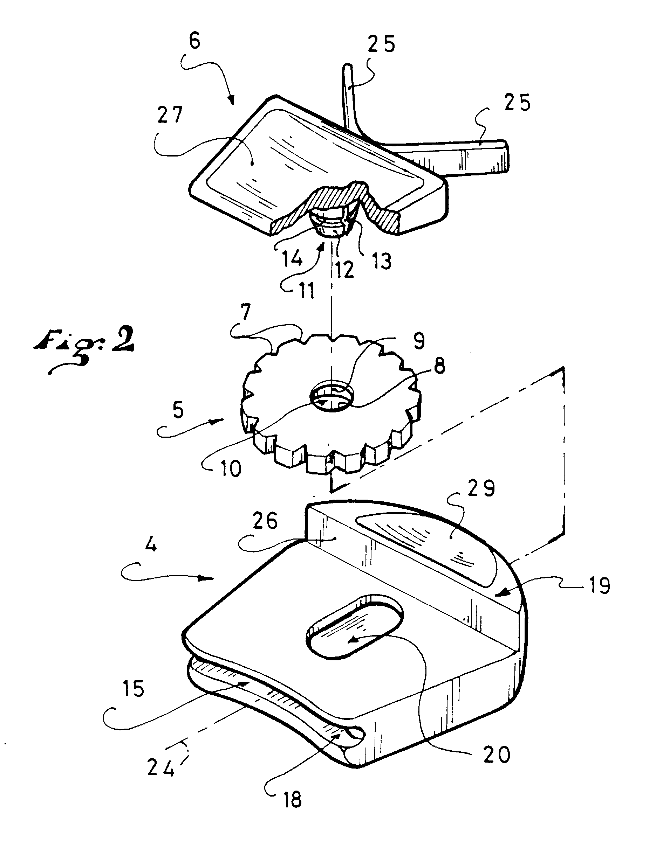

Comme le montre plus particulièrement la figure 2, le bloqueur 1 est composé de trois pièces qui sont un corps 4, un organe de blocage 5 de forme circulaire et un poussoir 6 situé à l'extérieur du corps 4 et relié à l'organe de blocage 5 pour la manoeuvre de celui-ci.

De préférence, l'organe de blocage 5 est constitué par une roue munie de dents 7 sur sa périphérie.

Le centre de la roue 5 est percé par un trou 8 aligné à un lamage 9 pour définir un oeil 10 de réception par encliquetage d'un axe 11 du poussoir, qui constituera l'axe de rotation de la roue 5.

L'axe 11, circulaire et directement issu du poussoir, a un côté sortant 12 destiné à la liaison avec la roue 5.

Ce côté est muni d'une fente 13 axiale sur une partie de sa longueur et est creusé par une gorge 14 périphérique d'accueil destinée à recevoir la roue 5.

L'extrémité du côté sortant a la forme d'un tronc de cône.

Cette structure permet l'assemblage par encliquetage de la roue 5 sur l'axe 11.

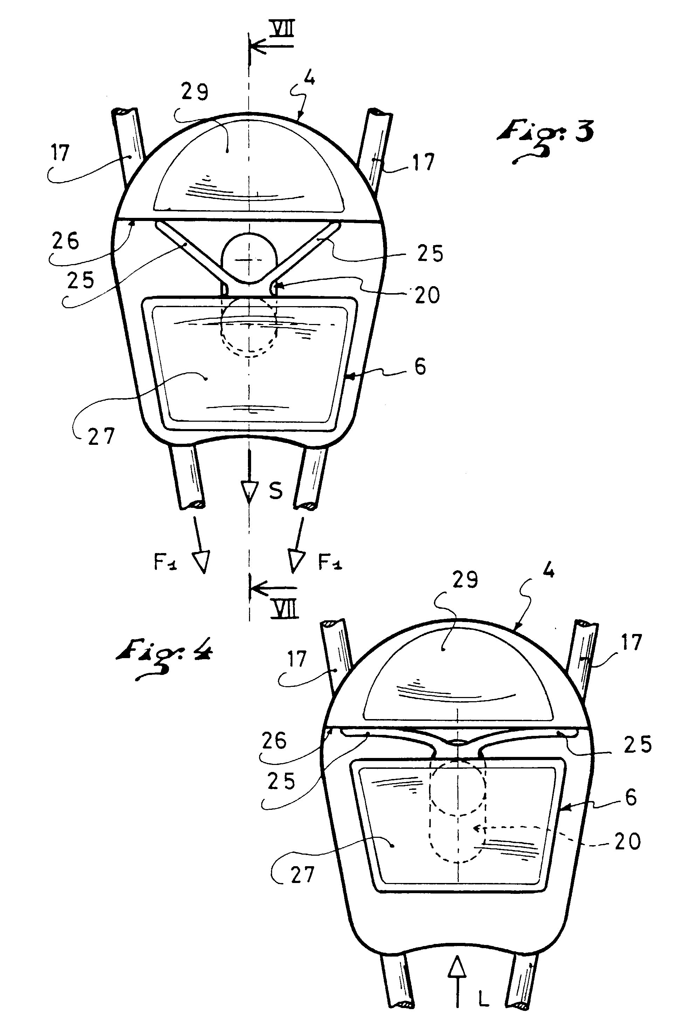

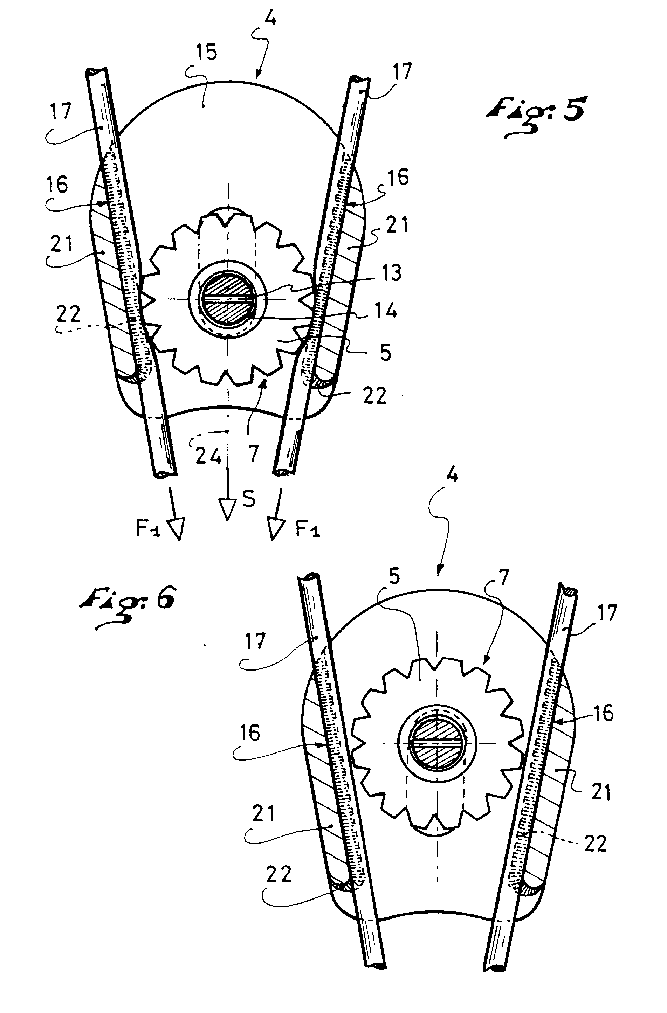

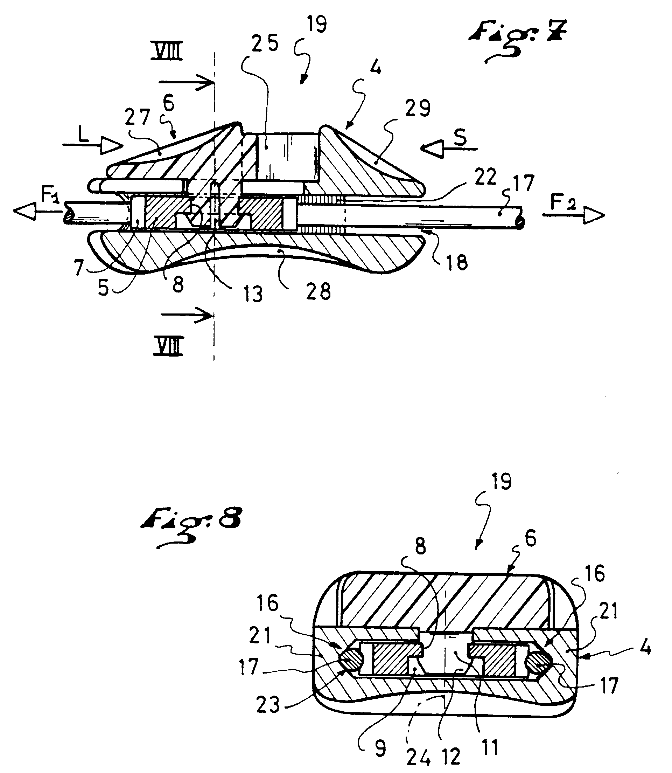

Le corps 4, tel que le montre la figure 5, comporte intérieurement une cavité 15 destinée au logement de la roue dentée 5 et définissant, ainsi qu'on le verra plus loin, deux chemins 16 pour le passage et le coincement des brins de fil 17.

Pour le montage du bloqueur 1 dans le corps 4, la roue 5 est mise en place à l'intérieur de la cavité 15 du corps 4 en passant par une ouverture 18 prévue à une extrémité axiale de ce corps, et le poussoir est encliqueté par son oeil 10 dans la roue 5 en traversant la paroi de la face supérieure 19 du corps 4 par une fente 20, ménagée dans cette face supérieure 19 selon une direction longitudinale axiale du corps.

Le poussoir 6 ainsi monté est mobile en translation par rapport au corps 4, dans la fente 20 et dans la direction longitudinale dudit corps 4, selon les sens des flèches "L" ou "S" montrées par exemple à la figure 3.

Les dimensions de la gorge 14 et du trou 8 de la roue 5 sont prévues de façon que la roue 5 soit montée libre en rotation autour de l'axe 11.

Les figures 5, 6, 7 et 8 montrent plus particulièrement la réalisation des chemins 16 et la coopération de l'organe de blocage ou roue 5 avec ceux-ci.

Les chemins 16 sont situés dans la cavité 15, le long de chacune des deux faces latérales 21 du corps 4, et comportent des stries 22.

Les chemins 16 ont pour recevoir les fils une section en forme de gorge qui peut être arrondie ou formée de segments droits 23, comme représentée sur la figure 8.

Comme le montrent les figures 5 et 6, les chemins 16 sont sensiblement rectilignes et leurs directions non parallèles convergent pour se croiser sur l'axe de symétrie 24 du bloqueur 1, dans la direction "S".

Il existe deux positions extrêmes du poussoir 6 qui correspondent l'une au blocage du lacet 3, l'autre ou desserrage total du lacet 3.

La position de blocage est représentée notamment aux figures 1, 3, 5, 7 et 8.

Comme le montre la figure 5, en position de blocage, la roue 5, qui est sollicitée en permanence dans le sens "S", serre les brins des fils 17 en appuyant ces demiers au fond des chemins 16 du corps 4.

Le blocage des brins de fils 17 est donc réalisé par effet de coincement grâce à la coopération des chemins 16 et de la roue 5.

L'avantage, procuré par le blocage par effet de coincement, est que la valeur de serrage des brins de fils 17 par la roue 5 est proportionnelle aux efforts de traction exercés sur les brins et résulte uniquement de ces efforts.

Un autre avantage, lié au fait que la roue 5 est libre en rotation autour de l'axe 11, est qu'une différence dans les efforts de traction sur les deux brins de fils 17 n'entraîne pas un coincement du système ou un glissement relatif de l'un des brins par rapport à l'organe de blocage 5.

Selon l'invention, un moyen élastique, montré notamment aux figures 2, 3, 4 et 7, est également intégré au bloqueur 1.

Le moyen élastique est constitué par deux languettes 25 élastiques qui s'étendent en forme de "Vé" à partir du centre du poussoir 6, languettes 25 dont les extrémités libres sont prévues de façon à prendre appui sur un talon 26 formé par un rebord du corps 4 pour solliciter le poussoir 6 dans la direction de blocage 5 montrée à la figure 3.

Ces languettes 25 sollicitent donc également, dans cette direction de blocage "S", la roue 5 par l'intermédiaire de son axe 11 qui est solidaire du poussoir 6.

Ainsi, l'organe de blocage 5 est sollicité élastiquement dans le sens de blocage des fils 17 par l'intermédiaire de son axe de rotation 11.

Selon un mode préféré de réalisation de l'invention, l'axe 11, le poussoir 6 et les languettes 25 forment un élément unique.

Les pièces et le fonctionnement décrits ci-avant procurent l'avantage, par rapport à l'art antérieur, d'avoir un blocage de fil précis et immédiat sans qu'il soit nécessaire d'agir extérieurement sur l'organe de blocage 5.

Par opposition, une action extérieure sur le poussoir 6 dans le sens de la flèche "L", montrée par exemple à la figure 4, provoque un déplacement relatif dudit poussoir 6 par rapport au corps 4.

Le poussoir 6 présente, sur sa face supérieure apparente, une cavité 27, montrée à la figure 7, dont l'empreinte correspond sensiblement à celle d'un doigt exerçant un effort dans la direction "L" pour le déblocage du système.

Par conséquent, un utilisateur peut agir facilement sur le poussoir 6 dans le sens de la flèche "L" avec un doigt prenant appui dans la cavité 27 dudit poussoir 6.

Pour réaliser le déblocage, l'action du doigt doit être exercée à l'encontre de la force élastique exercée par les languettes 25 sur le poussoir 6.

Comme l'axe 11 est lié au poussoir 6, la roue 5 guidée par l'axe 11, est éloignée du point de convergence des directions des chemins 16.

L'effet de coincement n'a plus lieu et le déblocage est réalisé.

L'avantage est que le déblocage selon l'invention est obtenu par une manipulation aisée.

Dans un même esprit, comme montré notamment aux figures 7 et 8, le corps 4 présente respectivement sur ses faces supérieure et inférieure des cavités 28 et 29 destinées à faciliter la prise ergonomique du corps lors du blocage.

Les empreintes des cavités 28 et 29 du corps 4 correspondent chacune sensiblement à celle d'un doigt orienté de façon à exercer un effort dans la direction "S".

Il est donc plus facile pour l'utilisateur de tirer sur le lacet 3 avec une main et d'appuyer sur le bloqueur 1 avec l'autre main pour le déplacer sur le lacet jusqu'à la position de blocage souhaitée.

Une fois cette position de blocage atteinte, il suffit de lâcher le bloqueur 1, sans avoir à exercer aucune autre action sur le coinceur ou poussoir, pour que le serrage souhaité soit obtenu, la roue 5 sollicitée par les languettes 25 exerçant automatiquement l'effet de coincement souhaité.

L'avantage est que là encore la manipulation est des plus aisées.

Un mode préféré de réalisation de l'invention fait appel au total à trois pièces qui sont le corps 4, la roue 5 et le poussoir 6.

Ces pièces seront de préférence réalisées en matière plastique même si d'autres matériaux peuvent convenir.

Il découle du mode de réalisation des avantages supplémentaires qui sont, notamment, un ensemble léger et simple, une bonne longévité, un entretien réduit, une bonne fiabilité et un coût de réalisation très bas.

## Revendications

1. Dispositif de blocage (1) d'au moins un brin de fil (17), comportant un corps creux (4), un organe de blocage (5) et un poussoir (6), le corps creux (4) comportant une cavité (15) définissant, d'une part, au moins un chemin de passage (16) pour chaque brin de fil (17), et d'autre part, un logement pour l'organe de blocage (5), l'organe de blocage étant destiné à coopérer avec chaque chemin (16) pour le blocage par effet de coincement de chaque brin de fil (17), l'organe de blocage étant de forme circulaire et monté libre en rotation à l'intérieur de la cavité (15), le poussoir (6) étant solidaire en translation de l'organe de blocage (5) pour la manoeuvre de celui-ci dans la direction de blocage (4), caractérisé en ce que l'organe de blocage (5) est monté libre en rotation par rapport au poussoir (6) autour d'un axe (11) de direction (26) sensiblement perpendiculaire à la direction de blocage, et en ce qu'au poussoir (6) sont associés des moyens élastiques (25) le sollicitant élastiquement dans le sens du blocage (S) du ou des brins de fil (17).

2. Dispositif de blocage selon la revendication 1, caractérisé en ce que les moyens élastiques (25) sont disposés entre une face du poussoir (6) et un talon (26) formé par un rebord du corps (4).

3. Dispositif selon l'une des revendications 1 ou 2, caractérisé en ce que le moyen élastique est constitué par deux languettes (25) s'étendant en forme de vé à partir du poussoir (6), et dont les extrémités libres prennent appui sur le talon (26).

4. Dispositif selon la revendication 3, caractérisé en ce que le moyen élastique (25), le poussoir (6) et l'axe (11) support de l'organe de blocage (5) constituent une pièce unique.

5. Dispositif selon l'une des revendications 1, 2 ou 4, caractérisé en ce que l'axe de rotation (11) de l'organe de blocage (5) est fendu sur une partie de la longueur et comporte une extrémité tronconique et une gorge (14), pour permettre l'encliquetage de l'organe de blocage (5).

6. Dispositif selon l'une quelconque des revendications 1 à 4, caractérisé en ce que le poussoir (6) comporte une cavité (27) dont l'empreinte correspond sensiblement à celle d'un doigt.

7. Dispositif selon l'une des revendications 1, 4 ou 5, caractérisé en ce que l'organe de blocage (5) est une roue dentée.

8. Dispositif selon la revendication 1, caractérisé en ce que le chemin de blocage (5) est muni de stries (22).

9. Dispositif selon l'une des revendications 1, 2 ou 3, caractérisé en ce que le corps (4) comprend, sur chacune de ses faces supérieure et inférieure, une cavité dont l'empreinte correspond sensiblement à celle d'un doigt.

## Patentansprüche

1. Vorrichtung zum Blockieren (1) zumindest eines Fadenendes (17), die ein hohles Gehäuse (4), eine Blockiereinrichtung (5) und einen Drücker (6) aufweist, wobei das hohle Gehäuse (4) einen Hohlraum (15) aufweist, der zum einen zumindest einen Durchgangsweg (16) für jedes Fadenende (17) und zum anderen eine Aufnahme für die Blockiereinrichtung (5) definiert, wobei die Blockiereinrichtung dazu bestimmt ist, mit jedem Weg (16) für die Blockierung durch Einklemmen jedes Fadenendes (17) zusammenzuwirken, wobei die Blockiereinrichtung eine runde Form aufweist und frei bezüglich Rotation im Inneren des Hohlraumes (15) montiert ist und wobei der Drücker (6) fest bezüglich einer Translationsbewegung der Blockiereinrichtung (5) für die Betätigung derselben in Richtung der Blockierung (4) verbunden ist,
dadurch gekennzeichnet, daß
die Blockiereinrichtung (5) frei in Rotation bezüglich des Drückers (6) um eine Achse (11) mit einer Richtung (26) montiert ist, die im wesentlichen senkrecht zur Blockierrichtung ist, und daß dem Drücker (6) elastische Einrichtungen (25) zugeordnet sind, die ihn elastisch in der Richtung der Blockierung (S) des Fadenendes oder der Fadenenden (17) beanspruchen.

2. Vorrichtung zum Blockieren gemäß Anspruch 1, dadurch gekennzeichnet. daß die elastischen Einrichtungen (25) zwischen einer Seite des Drückers (6) und einem Absatz (26), der durch einen Rand des Gehäuses (4) gebildet ist, angeordnet sind.

3. Vorrichtung gemäß einem der Ansprüche 1 oder 2, dadurch gekennzeichnet, daß die elastische Einrichtung durch zwei Zungen (25) gebildet ist, die sich in Form eines "V" ausgehend von dem Drücker (6) erstrecken und deren freie Enden Abstützung auf dem Absatz (26) nehmen.

4. Vorrichtung gemäß Anspruch 3, dadurch gekennzeichnet, daß die elastische Einrichtung (25), der Drücker (6) und die Trägerachse (11) der Blockiereinrichtung (5) ein einziges Teil bilden.

5. Vorrichtung gemäß einem der Ansprüche 1, 2 oder 4, dadurch gekennzeichnet, daß die Rotationsachse (11) der Blockiereinrichtung (5) über einen Teil der Länge mit einem Schlitz versehen ist und ein kegelstumpfförmiges Ende und eine Kehle (14) aufweist, um das Einklinken der Blockiereinrichtung (5) zu erlauben.

6. Vorrichtung gemäß irgendeinem der Ansprüche 1 bis 4, dadurch gekennzeichnet, daß der Drücker (6) einen Hohlraum (27) aufweist, dessen Vertiefung im wesentlichen einem Finger entspricht.

7. Vorrichtung gemäß einem der Ansprüche 1, 4 oder 5, dadurch gekennzeichnet. daß die Blockiereinrichtung (5) ein Zahnrad ist.

8. Vorrichtung gemäß Anspruch 1, dadurch gekennzeichnet, daß der Blockierweg (5) mit Rillen (22) versehen ist.

9. Vorrichtung gemäß einem der Ansprüche 1, 2 oder 3, dadurch gekennzeichnet, daß das Gehäuse (4) auf jeder seiner oberen und unteren Seiten einen Hohlraum aufweist, dessen Vertiefung im wesentlichen einem Finger entspricht.

## Claims

1. Device (1) for blocking at least one strand of thread (17), comprising a hollow body (4), a blocking member (5), and pusher (6), the hollow body (4) comprising a cavity (15) defining on the one hand, at least one path (16) for passage of each strand of thread (17), and on the other hand, a housing for the blocking member (5), the blocking member being adapted to cooperate with each path (16) for the wedging-effect blocking of each strand of thread (17), the blocking member having a circular shape and being mounted rotationally free within the cavity (15), the pusher (6) being translationally affixed to the blocking member (5) for maneuvering the latter in the blocking direction (4), characterized in that the blocking member (5) is mounted rotationally free with respect to the pusher (6) about an axis (11) of direction (26) substantially perpendicular to the blocking direction, and in that elastic means (25) are associated to the pusher (6) which bias it elastically in the blocking direction S of the strand(s) ofthread (17).

2. Blocking device according to claim 1, characterized in that the elastic means (25) are arranged between a surface of the pusher (6) and a heel (26) formed by an edge of the body (4).

3. Device according to one of claims 1 or 2, characterized in that the elastic means is constituted by two tongues (25) extending in a V-shape from the pusher (6), and whose free ends take support on the heel (26).

4. Device according to claim 3, characterized in that the elastic means (25), the pusher (6) and the support axis (11) of the blocking member (5) constitute one single element.

5. Device according to one of claims 1, 2 or 4, characterized in that the axis of rotation (11) of the blocking member (5) is slit along a portion of the length and comprises a truncated end and a groove (14), to enable locking of the blocking member (5).

6. Device according to any of claims 1 to 4, characterized in that the pusher (6) comprises a cavity (27) whose shape corresponds substantially to that of a fingers.

7. Device according to any of claims 1, 4 or 5, characterized in that the blocking member (5) is a toothed wheel.

8. Device according to claim 1, characterized in that the blocking path (5) is equipped with gouges (22).

9. Device according to one of claims 1, 2 or 3, characterized in that the body (4) includes, on each of its upper and lower surfaces, a cavity whose shape corresponds substantially to that of a finger.
